# EUROPEAN PATENT APPLICATION

(11) **EP 1 688 713 A2**
(43) Date of publication of application: **09.08.2006**
(21) Application number: 06075234.2
(22) Date of filing: 01.02.2006
(51) Int. Cl.: G01F 1/28

(54) **Flow control valve with flowmeter**

(30) Priority: 04.02.2005 IT MI20050165
(71) Applicant: Fracchia, Stefano, Guggiono MI (IT)
(72) Inventor: Fracchia, Stefano, Guggiono MI (IT)
(74) Representative: Raimondi, Margherita

(57) **Abstract**

Valve for regulating and measuring the flow rate of a fluid flowing through a header (1) and a branching duct (2) inside the said header, which comprises means (100;2100) for intercepting the fluid flow, which are movable axially upon operation of associated actuating means (210;2210) integral with an instrument (200) for measuring the flow rate of the fluid flow and comprising an element (202) movable axially against the opposing action of resilient means (204), said means (100;2100) for intercepting the fluid flow being coaxially coupled to a device (300;2300) for regulating the flow rate of the fluid flow which can be rotationally actuated independently of the said fluid intercepting means (100;2100) and is able to maintain its position upon a variation in the axial position of the means (100;2100) for intercepting the fluid flow.

## Description

The present invention relates to a valve for regulating and measuring the flow rate of a fluid flowing through a header and a branching duct inside the said header, which is equipped with a device for memorizing the setting of the fluid flow rate.

It is known in the sector relating to the design of fluid distribution networks that there exists the need to provide multiple-path headers for the supply/return flow of the fluid to/from end users; an example of these applications consists in the water distribution pipes for heating plants, in particular of the underfloor panel type.

It is also known that each of the pipe branches which extend from the header must be equipped with a valve for intercepting and regulating the flow rate so as to be able to compensate for the different losses in head which occur in the different panels owing to their specific size and their distance from the distribution header.

Valves which can be applied to said pipes are also known, said valves being able to perform regulation of the flow rate and at the same time carry out a measurement of the latter, this measurement being displayed on a calibrated scale present on the valve body.

Examples of these valves are, for example, known from DE 35 09 718 which describes a valve which, although performing correctly its dual function (regulation/measurement), nevertheless has a limitation due to the fact that, during regulation, the pressure detection element is movable in the axial direction together with the closing body bearing the graduated scale from which the measurement is read off.

This means that, in order to obtain a constant measurement during a variation in the flow rate (greater opening/closing of the obturator), it is necessarily required to design the measuring duct with a cylindrical form.

This cylindrical form results, however, in the drawback, however, consisting in that in these conditions it is not possible to obtain a substantially linear scale of measurement, which results in the need for a very densely arranged scale with obvious difficulty in correct reading by the user. In addition to this, the cylindrical duct results in high noise levels when the valve is fully open, owing to the increase in the speed of flow due to the constant cross-section.

In addition to this, it is known that in the abovementioned installations the measuring/regulating element (flowmeter) is arranged on the return branch and the fluid intercepting valve with an electrically and/or pneumatically operated actuator and/or the like is arranged on the delivery branch.

In this way, however, the main valve operates with the flow directed in the direction of closing of the valve and under high pressure conditions the irreversible closing of the valve with consequent interruption in the heating could also occur.

It is therefore necessary to envisage arranging the flowmeter on the delivery branch and the intercepting valve on the return branch, but this solution encounters difficulties owing to the fact that the flowmeters of the known type are suitable for operation on the return branch namely with a flow of the fluid which enters into the branching duct of the header, this producing turbulence and cavitation which are the cause of noise and vibration of the measuring instrument which is no longer able to provide a precise measurement.

In order to provide a solution to this type of problem DE-U-9404156 suggests providing a constriction in the aperture for entry of the fluid into the branching duct of the valve; this solution envisages a bell member arranged above the valve seat and able to determine said constriction with the free edge of the said aperture of the branching duct.

EP 1,321,746 also discloses a valve in which the flow rate regulating element comprises actuating means such that a rotation of the latter causes only the axial movement of the former and the intercepting means are independent of the measuring instrument during their movement in the axial direction.

In the case of all the known solutions, however, there remains the problem consisting in the fact that, whenever it is required to open/close the fluid supply in order to perform any type of maintenance, the setting of the flow rate which had been effected is lost and upon opening the valve again it is required to perform again all the calibration operations.

The technical problem which is posed, therefore, is that of providing a valve for intercepting and regulating the flow rate of fluid branch pipes, with incorporated an instrument for measuring and displaying the value of the said flow rate, which is able to maintain the information relating to the programmed flow rate in the event of variation and/or closing and subsequent reopening of the fluid delivery.

Within the scope of this problem a further requirement is that the valve should be able to be installed on the branch for delivery to the installation user, should allow effective regulation with a precise indication as to the measurement of the flow rate and should consist of a small number of parts, resulting in easy and low-cost manufacture and assembly.

These technical problems are solved according to the present invention by a valve for regulating and measuring the flow rate of a fluid flowing through a header and a branching duct inside the said header, which comprises means for intercepting the fluid flow, integral with an instrument for measuring the flow rate of the fluid flow and coaxially coupled to a device for regulating the flow rate of the fluid flow, which can be rotationally actuated independently of the said fluid intercepting means and is able to maintain its position upon a variation in the axial position of the means for intercepting the fluid flow.

Further details may be obtained from the following description of a non-limiting example of embodiment of the invention provided with reference to the accompanying drawings in which:

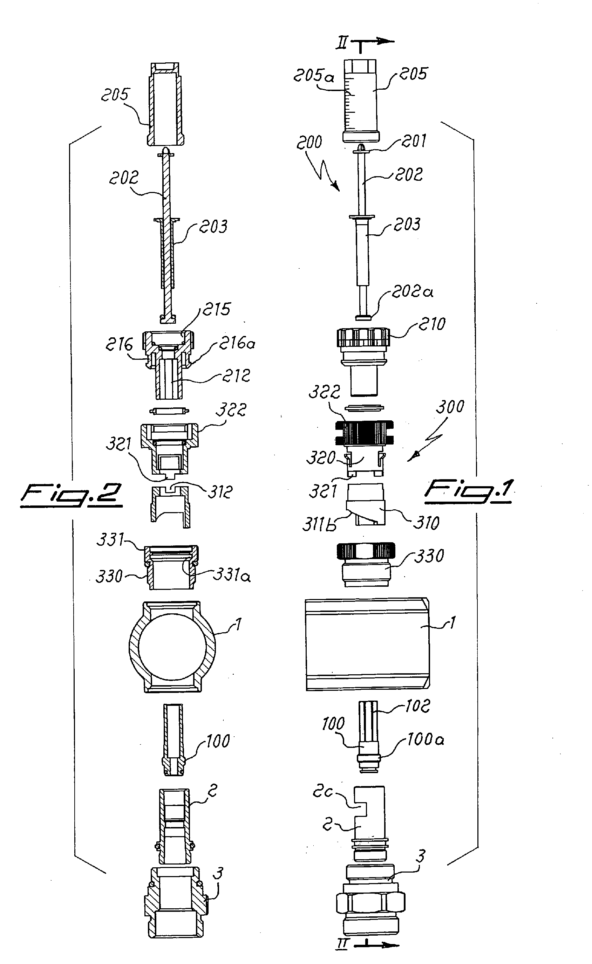

- Figure 1 shows an exploded view of the valve according to the invention;
- Figure 2 shows an axial cross-section along the plane indicated by II-II in Fig. 1;
- Figure 3 shows an axial schematic cross-section through the valve assembled in the closed condition;
- Figure 4 shows a view of the valve of Figure 3 from the delivery side of the header;

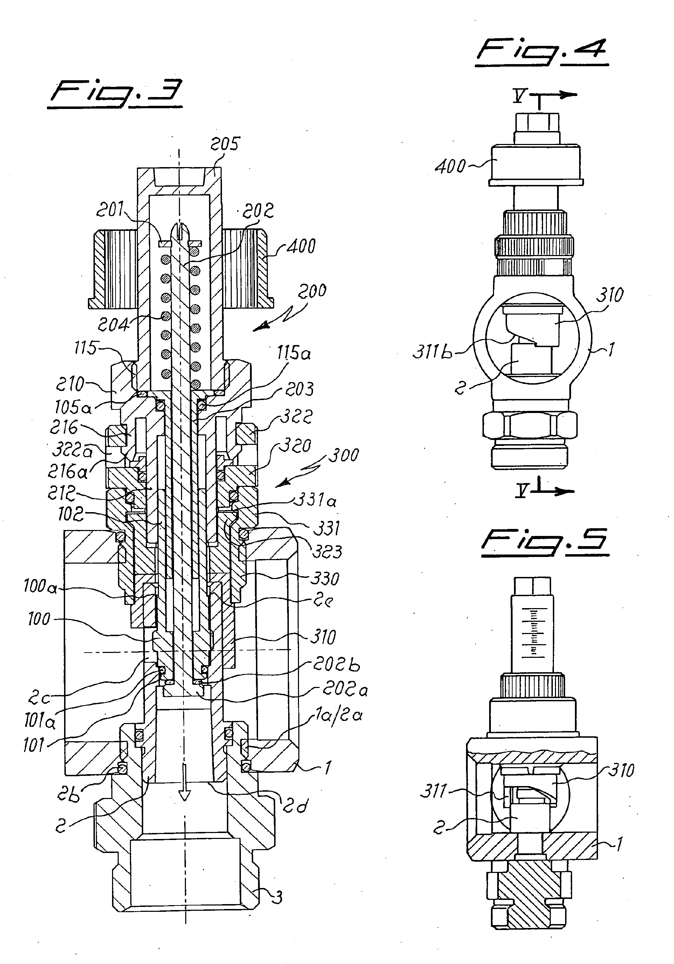

- Figure 5 shows a cross-section along the plane indicated by V-V in Fig. 4;

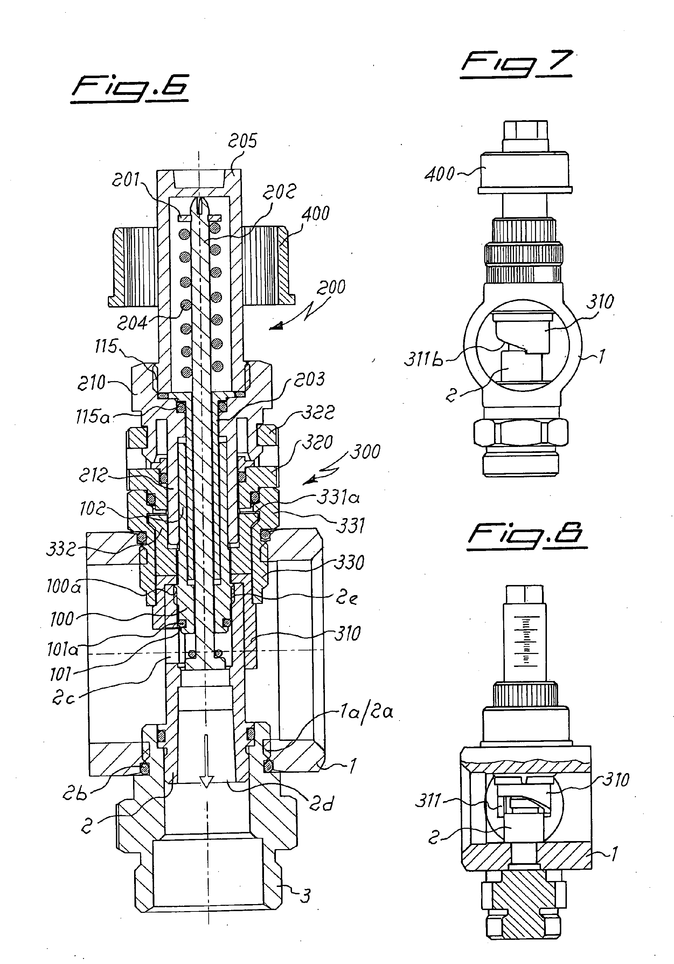

- Figure 6 shows an axial schematic cross-section through the assembled valve in the open condition;

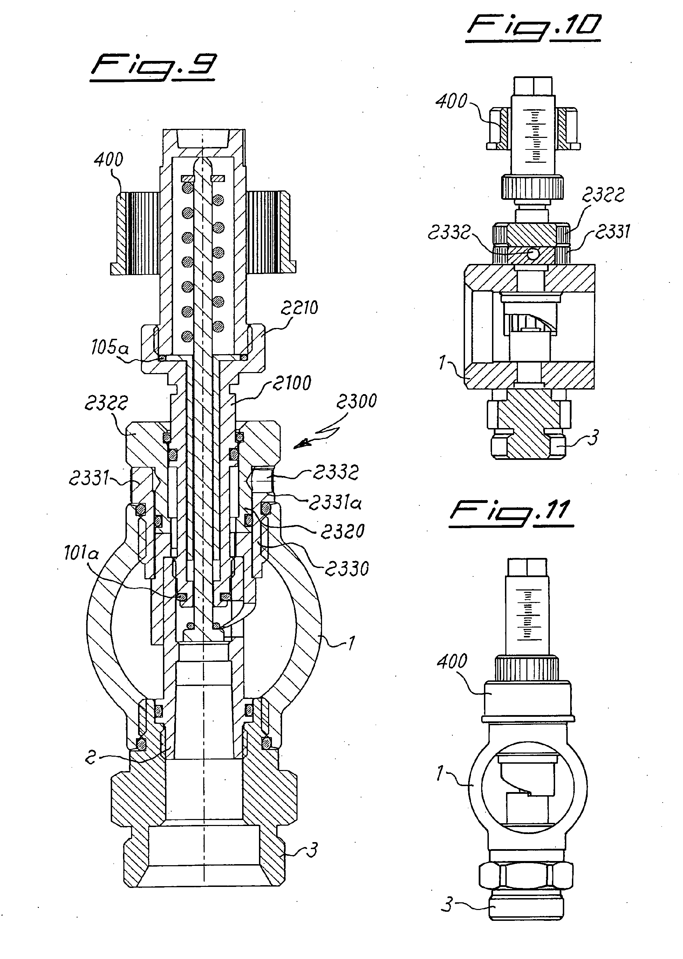

- Figure 7 shows a view of the valve according to Figure 6 from the delivery side of the header;
- Figure 8 shows a cross-section along the plane indicated by VIII-VIII in Fig. 7;
- Figure 9 shows an axial schematic cross-section through a second example of embodiment of the valve assembled in the open condition;
- Figure 10 shows a schematic cross-section similar to that of Fig. 5 of the valve according to Fig. 9; and
- Figure 11 shows a view of the valve according to Figure 9 from the delivery side of the header.

As shown, a header 1 envisages at least one branching duct 2 having a substantially cylindrical shape and extending inside the header in a direction substantially transverse to that of the fluid flow; in the example according to the figure, the branching duct 2 is integrally joined to the header 1 by means of a connection comprising screw 2a and female thread 1a with the arrangement of a sealing ring 2b in between.

An opening 2c forming the aperture for entry of the fluid into the duct is formed on the side surface of the branching duct 2, while the aperture 2d (situated at the bottom with reference to the figure) forms the outlet aperture of the valve towards a delivery union 3; the flow of the fluid therefore takes place from the header 1 to the branching duct 2 towards the said delivery branch 3 as indicated by the arrow.

The branching duct 2 has, coaxially arranged inside it, an obturator 100 provided with a thread 100a suitable for mating with a corresponding female thread 2e of the branching duct 2.

The internal free end of the obturator 100 has a seat 101 for housing a sealing ring 101a.

The shank 102 of the obturator, which is internally hollow, has a polygonal outer shape suitable for insertion inside a corresponding seat 212 of a ring nut 210 for supporting and actuating a measuring instrument 200 so that the obturator is rotationally integral with the ring nut, but free to move in both directions with respect thereto. The instrument 200 comprises an indicator element 201 connected to a rod 202 coaxially inserted inside a guide element 203 in turn coaxially arranged inside the obturator 100; in the rest condition the rod 202 is pushed towards the outer end of the instrument by a spring 204 coaxial with the rod 202.

The graduated scale 205a is printed on the outer surface of a bell member 205 which is conveniently made of transparent material so that the relative position of the indicator 201 with respect to the graduated scale 205a is visible from the outside.

Said rod 202 has at its free end inside the branching duct 2 a disk 202a able to interfere with the fluid flow so as to form the sensor element of the measuring instrument.

A sealing ring 202b of the O-ring type is also arranged concentrically on the disk 202a and is able to ensure sealing so as to allow removal of the display element forming the graduated scale of the measuring instrument for cleaning/replacement thereof.

The bell member 205 of the instrument 200 is constrained, for example by means of a screw/female thread connection, to a corresponding seat 215 formed in the head of the said ring nut 210; said ring nut has in turn an axial section 216 extending longitudinally and provided with a toothed free end 216a so as to allow insertion and locking in the axial direction of the instrument 200 onto a flow rate regulating device 300, but allow relative rotation.

Said device 300 for regulating the flow rate of the delivery fluid comprises a sleeve 310 with an internal diameter such as to allow coaxial mounting onto the free end of the branching duct 2; the axial side surface section of the sleeve mounted on the duct 2 has a shaped opening 311 with at least one inclined section 311b.

The outer end surface of the said sleeve 310 has two diametrically opposite seats 312 suitable for insertion of two corresponding teeth 321 projecting axially from the hollow cylindrical body of an operating element 320 having a head piece in the form of a control wheel 322.

The side surface of the control wheel 322 also has, formed therein, slits 322a able to allow access to said annular tooth 216a; said connection causes relative locking in the axial direction, but allows relative rotation of the two parts.

As will emerge more clearly below, the rotation of the control wheel 322 causes a rotation of the sleeve 310 such as to bring the shaped opening 311 of the side surface opposite the aperture 2c of the duct 2, causing greater or lesser closing thereof from a minimum position corresponding to a totally closed aperture to a maximum position corresponding to a totally open aperture.

Although envisaged as two parts 310 and 320 for convenient assembly of the valve, it is envisaged that the sleeve 310 may be formed as one piece with the cylindrical body 320 of the operating control wheel 320.

According to the invention it is envisaged moreover that the said element 300 for regulating the flow rate is coupled to a union 330 fixed to the header 1 by means of a screw/female thread connection and provided with a collar 331 inside which the device for regulating the flow rate may be coaxially inserted.

The collar 331 is also provided with undercuts 331a suitable for engagement with corresponding lugs 323 which are resiliently deformable in the radial direction upon insertion of the collar 321 into the union and the return of which into the original position causes locking in the axial direction with the union 330 of the control wheel 322 and therefore the entire flow rate regulating device 300.

In order to obtain also rotational locking of the flow rate regulating element 300 so as to prevent accidental handling, it is envisaged coaxially mounting a cap 400 which is internally knurled and has a height such as to allow engagement with the external surfaces of the control wheel 322 and collar 331 alone so as to prevent the relative rotation of the two parts and therefore the variation in the flow rate set.

The operating principle of the valve according to the invention is as follows:
- once the branching duct 2 and the delivery union 3 have been assembled on the header 1 and the union, device 330 for regulating the flow rate 300 and measuring instrument 200 (screwed onto the branching duct 2 by means of mating of the screw 100a of the obturator 100 onto the female thread) have been inserted in a position coaxial with the duct 2, the following is performed:

- the ring nut 210 is rotated so as to bring the free end of the obturator 100 into a position such as to leave the side aperture 2c of the duct 2 completely free (valve totally open);
- the control wheel 322 of the regulating element 300 is rotated, producing, by means of the shaped side surface 311b of the sleeve 310, greater or lesser closing of the aperture 2c of the branching duct 2 until the set flow rate of the fluid is obtained;
- once the said predefined flow rate has been reached, the cap 400 is fitted so as to ensure the simultaneous locking of the regulating device 300 and the measuring instrument 200;
- the valve is ready for use.

Should it be required to close the delivery of the flow, it is possible to operate the ring nut 210, rotating it so as to cause the movement of the obturator 100 which is displaced transversely so as to close the branching duct 2 which will be opened again at the end of maintenance with the reverse operation.

Figures 9 to 11 show a second embodiment of the valve according to the invention in which the obturator 100 is provided with a thread 100a suitable for mating with a corresponding female thread 2e of the branching duct 2 and is coaxially coupled to the measuring instrument 200 by means of the bell member 205 which is constrained, for example by means of a screw/female thread connection, to a corresponding seat 215 of a ring nut 2210 forming the outer head of the obturator 100; a sealing O-ring 105a is arranged between the bell member 205 and the seat 215.

In this configuration also the flow rate regulating element 300 is coupled to a union 330 fixed to the header 1 by means of a screw/female thread connection and provided with a collar 2331 inside which the device for regulating the flow rate may be coaxially inserted.

The collar 2331 is also provided with radial holes 2331a with a female thread for insertion of corresponding grub screws 2332, tightening of which produces the locking both in the axial direction and in the radial direction of the control wheel 322 and therefore the flow rate regulating device 300.

In this case the cap 400 therefore has only a protective function.

It can therefore be seen how in the configuration according to Fig. 9 the fact of having formed the obturator as one piece produces a displacement in the axial direction of the instrument/obturator assembly following a rotation of the bell member 205 in order to regulate the flow rate of the flow.

It can therefore be seen how both the embodiments of the valve according to the invention allow, if necessary, complete closure of the delivery by means of the obturator 100 connected to the measuring instrument 200, the rotation of which causes the axial displacement of the head 101 of the said obturator from a totally closed position into a totally open position; this operation is, however, independent of measurement of the flow rate set by means of the associated device 300 which remains locked in position, not being influenced by the axial displacements of the obturator 100.

In this way the flow rate setting previously made will be memorized and, when the valve is opened again, it will be possible to restore the said flow rate by means of rotation of the measuring instrument in the opposite direction until it is possible to read off the said flow rate value from the graduated scale.

The valve according to the present invention also allows separation of the bell member 205 of the measuring instrument 200 in order to perform cleaning operations necessary as a result of the accumulation of residual matter which is conveyed by the fluid and tends to hamper reading of the measurement.

For this operation the ring nut 210;2210 is rotated so as to bring the obturator 100;2100 into the closed valve position so that the spring 204 positions the sealing ring 202b of the rod 202 against the head of the said obturator, preventing any leakage of fluid and allowing unscrewing of the bell member 205 from the seat of the element 210 for coupling to the obturator.

## Claims

1. Valve for regulating and measuring the flow rate of a fluid flowing through a header (1) and a branching duct (2) inside the said header, which comprises means (100;2100) for intercepting the fluid flow, which are movable axially upon operation of associated actuating means (210;2210) integral with an instrument (200) for measuring the flow rate of the fluid flow and comprising an element (202) movable axially against the opposing action of resilient means (204), **characterized in that** said means (100;2100) for intercepting the fluid flow are coaxially coupled to a device (300;2300) for regulating the flow rate of the fluid flow, which can be rotationally actuated independently of the said fluid intercepting means (100;2100) and is able to maintain its position upon a variation in the axial position of the means (100;2100) for intercepting the fluid flow.

2. Valve according to Claim 1, **characterized in that** said branching duct (2) has an opening (2c) forming the aperture for entry of the fluid into the branching duct (2).

3. Valve according to Claim 1, **characterized in that** said device (300;2300) for regulating the flow rate of the delivery fluid comprises a sleeve (310) with an internal diameter such as to allow coaxial mounting onto the free end of the branching duct (2).

4. Valve according to Claim 3, **characterized in that** the axial side surface section of the sleeve (310) mounted on the duct (2) has a shaped opening (311).

5. Valve according to Claim 4, **characterized in that** the shaped opening (311) has at least one inclined section (311b).

6. Valve according to Claim 3, **characterized in that** the outer end surface of the said sleeve (310) has at least one seat (312) suitable for insertion of a corresponding tooth (321) projecting axially from the hollow cylindrical body of an operating element (320;2320) .

7. Valve according to Claim 6, **characterized in that** the operating element (320) comprises a head piece in the form of a control wheel (322;2322) outside the header (1).

8. Valve according to Claim 7, **characterized in that** said control wheel (322) has annular slits (322a) passing radially through.

9. Valve according to Claim 6, **characterized in that** the sleeve (310) is formed as one piece with the cylindrical body (320) of the operating control wheel (322).

10. Valve according to Claim 1, **characterized in that** the said device (300;2300) for regulating the flow rate is coupled to a union (330;2330) fixed to the header (1) .

11. Valve according to Claim 10, **characterized in that** the said union (330;2330) is provided with a collar (331;2331) inside which the device (300;2300) for regulating the flow rate may be coaxially inserted.

12. Valve according to Claim 11, **characterized in that** radial seats (331a) are provided on the collar (331) for the insertion of corresponding elastic lugs (323) of the operating element (320) able to produce locking in the axial direction of the flow rate regulating device (300).

13. Valve according to Claim 11, **characterized in that** the collar (2331) is provided with radial holes (2331a) for insertion of corresponding grub screws (2332), tightening of which causes the locking both in the axial direction and in the radial direction of the flow rate regulating means (2300).

14. Valve according to Claim 1, **characterized in that** said intercepting means (100;2100) consist of an obturator provided with a thread (100a) suitable for mating with a corresponding female thread (2e) of the branching duct (2).

15. Valve according to Claim 14, **characterized in that** the inner free end of the obturator (100;2100) has an annular seat (101) for housing a sealing ring (101a).

16. Valve according to Claim 14, **characterized in that** the shank (102) of the obturator has a polygonal outer surface.

17. Valve according to Claim 17, **characterized in that** the obturator (100) is inserted inside a coaxial seat (212) of an element (210) for coupling to the measuring instrument (200).

18. Valve according to Claim 18, **characterized in that** said obturator (100) is able to be displaced in an axial direction with respect to the element (210) for coupling to the measuring instrument.

19. Valve according to Claim 14, **characterized in that** the obturator (2100) is integral with a head piece (2210) for coupling to the measuring instrument (200).

20. Valve according to Claim 1, **characterized in that** the obturator (100;2100) has on its inside a coaxial guide element (203).

21. Valve according to Claim 20, **characterized in that** the indicator element (201) of the measuring instrument (200) is connected to a rod (202) coaxially inserted inside said guide (203).

22. Valve according to Claim 1, **characterized in that** the graduated scale (205a) of the measuring instrument (200) is printed on the outer surface of a bell member (205) made of transparent material.

23. Valve according to Claim 22, **characterized in that** the bell member (205) is constrained to a corresponding seat (215) formed in the element (210;2210) for coupling to the obturator (100;2100).

24. Valve according to Claim 23, **characterized in that** the element (210;2210) for coupling with the obturator (100;2100) has a cylindrical section (216) extending longitudinally and provided with a toothed free end (216a) suitable for insertion inside a corresponding annular seat (322a) of the flow rate regulating device (300) .

25. Valve according to Claim 23, **characterized in that** an O-type sealing ring (105a) is arranged between the bell member (205) and the seat (215).

26. Valve according to Claim 1, **characterized in that** said rod (202) has at its free end inside the branching duct (2) a disk (202a) able to interfere with the fluid flow so as to form the sensor element of the measuring instrument (200).

27. Valve according to Claim 26, **characterized in that** a sealing ring (202b) of the O-ring type, able to ensure a seal so as to allow separation of the bell member (205) of the instrument (200), is arranged concentrically on the said disk (202a).

28. Valve according to Claim 1, **characterized in that** it comprises a ring nut (400) movable axially on the measuring instrument from a lowered position for engagement and rotational locking of the flow rate regulating device (300) into a raised position for disengagement therefrom.

29. Valve according to Claim 28, **characterized in that** said ring nut (400) has a height in the axial direction such as to allow engagement with the outer surfaces of the control wheel (322;2322) and collar (331;2331) alone.
